# EUROPÄISCHE PATENTSCHRIFT

(11) **EP 0 796 991 B1**
(45) Veröffentlichungstag und Bekanntmachung des Hinweises auf die Patenterteilung: **07.11.2001**
(21) Anmeldenummer: 96118678.0
(22) Anmeldetag: 21.11.1996
(51) Int. Cl.: F02M 69/54, G05D 16/06, F16L 37/08

(54) **Druckregelventil mit Anschlussverbindung**
Pressure regulating valve with connection joint
Soupape de régulation de pression avec dispositif de raccord

(30) Priorität: 23.03.1996 DE 19611549
(43) Veröffentlichungstag der Anmeldung: 24.09.1997
(73) Patentinhaber: ROBERT BOSCH GMBH, 70442 Stuttgart (DE)
(72) Erfinder: Schulz, Wolfgang, 74321 Bietigheim-Bissingen (DE); Drutu, Lorenz, Dipl.-Ing., 70806 Kornwestheim (DE)

(56) Entgegenhaltungen:
- US-A- 4 536 139
- US-A- 4 928 729
- US-A- 5 105 787
- US-A- 5 330 235
- US-A-5330235 (Abstract, Fig. 1,2)

## Beschreibung

### Stand der Technik

Die Erfindung geht aus von einem Druckregelventil nach der Gattung des Anspruchs 1.

Zum Regeln des Drucks in einer Kraftstoffversorgungsanlage einer Brennkraftmaschine wird üblicherweise ein Druckregelventil verwendet. Das Druckregelventil befindet sich auf der Druckseite der Kraftstoffpumpe. Die von der Brennkraftmaschine nicht benötigte überschüssige Menge des Kraftstoffs wird über das Druckregelventil zu einem Kraftstoffvorratsbehälter zurückgeleitet. Dabei regelt das Druckregelventil den Druck auf der Druckseite der Kraftstoffpumpe.

Bekannte Druckregelventile haben üblicherweise einen Zulaufanschluß und einen Rücklaufanschluß für den Kraftstoff. Die europäische Offenlegungsschrift EP-A-0 392 313 bzw. die amerikanische Patentschrift US 4,928,729 zeigen ein derartiges Druckregelventil. Bei diesem bekannten Druckregelventil kann an den Rücklaufanschluß eine weiterführende Leitung angeschlossen werden. Je nach Fahrzeugtyp haben die weiterführenden Leitungen unterschiedliche Durchmesser und/oder die Form des Rücklaufanschlusses zum Anschließen der weiterführenden Leitungen muß je nach Fahrzeugtyp unterschiedlich sein und/oder je nach Fahrzeugtyp muß der Rücklaufanschluß des Druckregelventils gerade oder abgewinkelt sein, wobei der erforderliche Winkel je nach Fahrzeugtyp unterschiedlich sein kann. Dadurch ergibt sich eine Vielzahl von Ausführungsformen des Druckregelventils. Die Vielzahl der Ausführungsformen führt zu einer kostspieligen Lagerhaltung unterschiedlicher Druckregelventile und führt zu hohen Herstellkosten, weil von jeder Ausführungsform nur eine relativ kleine Stückzahl gefertigt werden kann.

Die US 5,105,787 zeigt eine aus nichtmetallischem Werkstoff bestehende Kraftstoffleiste, in der zwei senkrecht zueinander angeordnete, miteinander verbundene Öffnungen vorgesehen sind. In eines der beiden Öffnungen ist ein Druckregler und in die andere Öffnung ein Metallrohr eingesetzt. Die in der US 5,105,787 gezeigte Kraftstoffleiste hat den Nachteil, dass insgesamt sehr viel Bauraum benötigt wird und ein erheblicher Materialeinsatz erforderlich ist. Weitere Nachteile sind, dass, je nach örtlichen Einbauverhältnissen, die Kraftstoffleiste unterschiedlich geformt sein muß und an vielen Stellen abgedichtet werden muß.

### Vorteile der Erfindung

Das erfindungsgemäße Druckregelventil mit den kennzeichnenden Merkmalen des Anspruchs 1 hat gegenüber dem in der EP-A-0 392 313 gezeigten Druckregelventil den Vorteil, daß unabhängig von der Art der an das Druckregelventil anzuschließenden Leitung ein einheitlich ausgeführtes Druckregelventil hergestellt und bevorratet werden kann. Dadurch ergeben sich hohe Stückzahlen je Fertigungslos, was sich günstig auf die Herstellkosten des Druckregelventils auswirkt.

Durch die in den Unteransprüchen aufgeführten Maßnahmen sind vorteilhafte Weiterbildungen und Verbesserungen des im Hauptanspruch angegebenen Druckregelventils möglich.

Die Schnappverbindung, die dafür sorgt, daß im montierten Zustand ein Bereich des Druckregelventils in Eingriff mit dem Kupplungsteil steht, sorgt vorteilhafterweise für eine sichere Verbindung zwischen dem Druckregelventil und dem Kupplungsteil. Zusätzlich sorgt die Schnappverbindung dafür, daß das Kupplungsteil ohne großen Aufwand mit dem Druckregelventil verbunden werden kann.

Ist die Schnappverbindung lösbar, so bietet dies den Vorteil, daß das Druckregelventil und/oder die an das Druckregelventil angeschlossene Leitung problemlos ausgewechselt werden kann.

Der Dichtring sorgt vorteilhafterweise für eine zuverlässige Abdichtung zwischen dem Kupplungsteil und dem Druckregelventil.

Die Reglerdüse mit der Stecköffnung kann vorteilhafterweise im wesentlichen vollständig in das Ventilgehäuse des Druckregelventils integriert sein, was den Vorteil hat, daß die Gesamtabmessungen des Druckregelventils klein sind und das Druckregelventil kostengünstig hergestellt werden kann, und ferner ist die Reglerdüse mit der Stecköffnung an geschützter Stelle eingebaut.

### Zeichnung

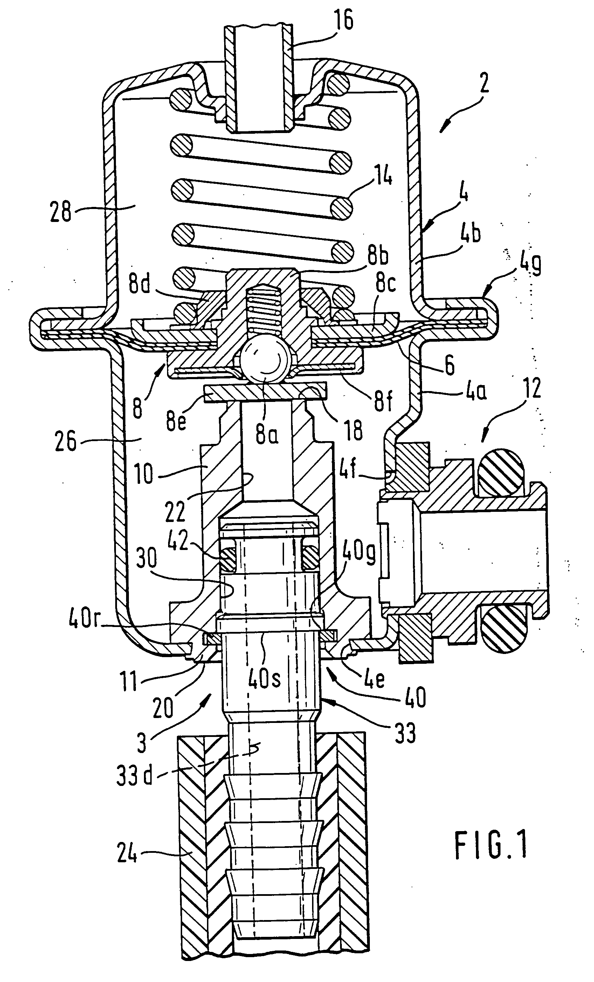

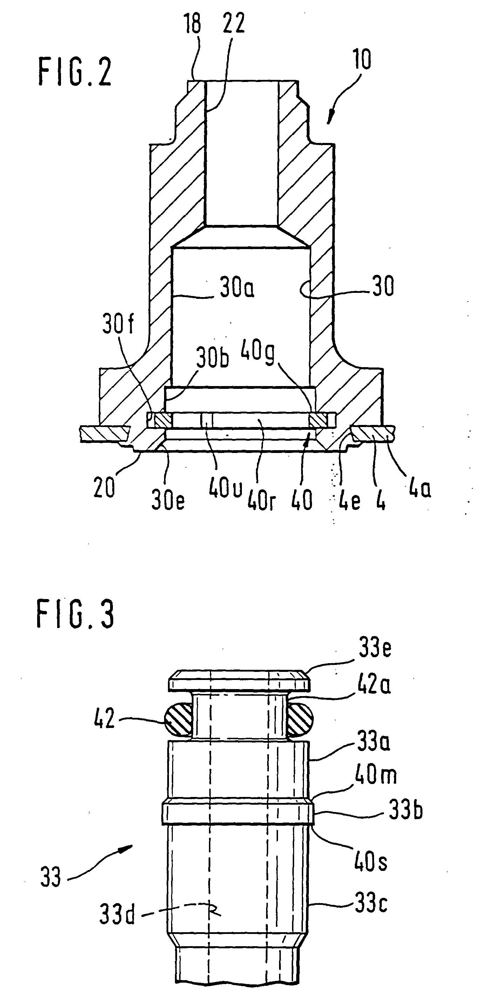

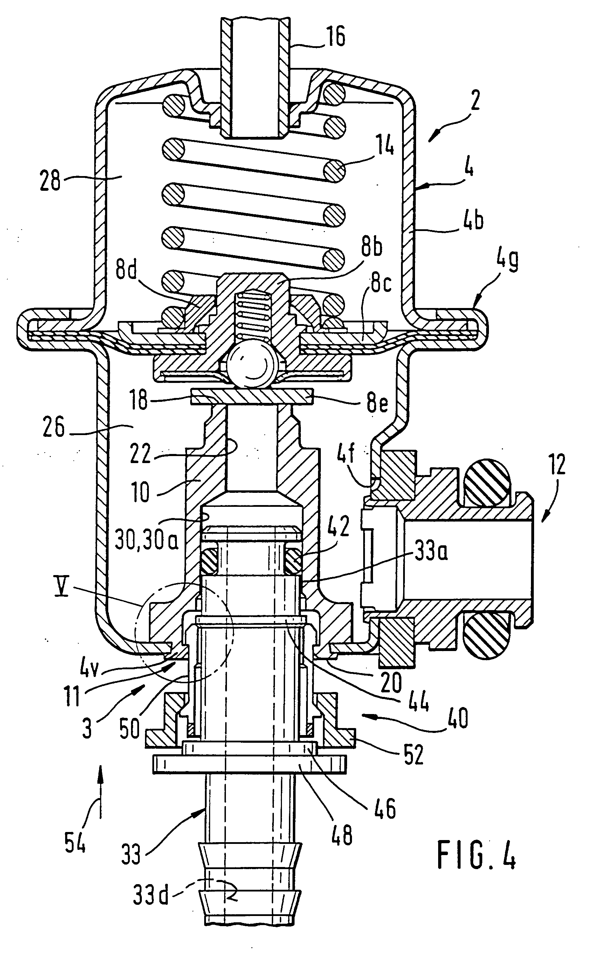

Ausgewählte, besonders vorteilhafte Ausführungsbeispiele der Erfindung sind in der Zeichnung vereinfacht dargestellt und in der nachfolgenden Beschreibung näher erläutert. Es zeigen die Figuren 1 und 4 unterschiedliche Ausführungsbeispiele und die Figuren 2, 3, 5 und 6 beispielhaft einige Einzelheiten der Ausführungsbeispiele.

### Beschreibung der Ausführungsbeispiele

Das erfindungsgemäße Druckregelventil mit Anschlußverbindung dient zum Regeln eines Drucks eines Fluids, vorzugsweise Kraftstoff, in einem Fluidraum. Das Druckregelventil kann vorzugsweise bei Brennkraftmaschinen verwendet werden, bei denen in der Kraftstoffversorgungsanlage ein Druck des Kraftstoffs geregelt werden soll.

Die **Figur 1** zeigt anhand eines ersten Ausführungsbeispiels einen Querschnitt durch ein für die Beschreibung bevorzugt ausgewähltes, beispielhaft ausgeführtes, besonders vorteilhaftes Druckregelventil 2 mit einer Anschlußverbindung 3.

Das Druckregelventil 2 umfaßt ein Ventilgehäuse 4, eine Membran 6, einen Schließkörper 8, eine Reglerdüse 10, einen ersten Fluidanschluß 11, einen zweiten Fluidanschluß 12, eine Schließfeder 14 und einen Anschluß 16. Das Ventilgehäuse 4 ist zusammengesetzt aus einem Gehäuseunterteil 4a und einem Gehäuseoberteil 4b. Die Membran 6 ist zwischen dem Gehäuseunterteil 4a und dem Gehäuseoberteil 4b entlang ihres Umfangs eingespannt.

Der Schließkörper 8 umfaßt beispielsweise eine Kugel 8a, ein Halteelement 8b, einen Federteller 8c, eine Federführung 8d, eine Schließscheibe 8e und eine Haltescheibe 8f. Die Membran 6 hat eine mittige Aussparung und ist am Umfang dieser Aussparung im Schließkörper 8 zwischen dem Halteelement 8b und dem Federteller 8c eingespannt. Die Schließscheibe 8e ist mit der Kugel 8a fest verbunden. Die Haltescheibe 8f hält die Kugel 8a am Halteelement 8b des Schließkörpers 8.

Die Reglerdüse 10 hat ein dem Schließkörper 8 zugewandtes inneres Ende mit einer ersten Stirnseite, an der sich ein Ventilsitz 18 befindet, und ein aus dem Ventilgehäuse 4 führendes äußeres, dem Schließkörper 8 abgewandtes Ende mit einer zweiten Stirnseite, die nachfolgend als äußere Stirnseite 20 der Reglerdüse 10 bezeichnet wird. Durch die Reglerdüse 10 verläuft eine Anschlußöffnung 22. Die Anschlußöffnung 22 führt von dem Ventilsitz 18 zur äußeren Stirnseite 20. Bei dem dargestellten Ausführungsbeispiel ist die Reglerdüse 10 einstückig ausgeführt. Es sei aber erwähnt, daß die Reglerdüse 10 beispielsweise auch aus zwei, mittels eines Preßsitzes fest zusammengefügten Teilen bestehen kann.

Bei dem für die Zeichnung bevorzugt ausgewählten Ausführungsbeispiel dient der zweite Fluidanschluß 12 als Zulaufanschluß. Von einer nicht dargestellten Pumpe, beispielsweise einer Kraftstoffpumpe, führt eine nicht dargestellte Leitung zu dem Fluidanschluß 12. Von dem ersten Fluidanschluß 11 führt eine Fluidleitung 24 beispielsweise zu einem nicht dargestellten Vorratsbehälter bzw. Kraftstofftank. In der Figur 1 ist von der Fluidleitung 24 nur das dem Druckregelventil 2 zugewandte Ende dargestellt.

Die Membran 6 trennt einen Fluidraum 26 von einer Ventilkammer 28. Die Ventilkammer 28 ist über den Anschluß 16 über eine nicht dargestellte Leitung beispielsweise mit einem nicht dargestellten Saugrohr der Brennkraftmaschine verbunden. Bei dem dargestellten Ausführungsbeispiel dient der Fluidanschluß 12 als Zulaufanschluß, und der Fluidanschluß 11 dient als Rücklaufanschluß.

Der Druck in der Ventilkammer 28 und die Kraft der Schließfeder 14 ergeben eine Schließkraft. Wenn der Druck des Fluids in dem Fluidraum 26 einen bestimmten Wert überschreitet, dann hebt der Schließkörper 8 entgegen der Schließkraft vom Ventilsitz 18 ab, und das Fluid kann vom Fluidanschluß 12 durch den Fluidraum 26, durch einen zwischen der Schließscheibe 8e und dem Ventilsitz 18 sich bildenden Spalt, durch die Anschlußöffnung 22, über den Fluidanschluß 11 in die Fluidleitung 24 strömen.

Im Gehäuseunterteil 4a gibt es eine Gehäuseaussparung 4e. Die Reglerdüse 10 ragt durch die Gehäuseaussparung 4e. Die Reglerdüse 10 ist in die Gehäuseaussparung 4e so eingebaut, daß sich der deutlich überwiegende Teil der Reglerdüse 10 innerhalb des Ventilgehäuses 4 befindet. Von der Reglerdüse 10 ragt im wesentlichen nur die äußere Stirnseite 20 aus dem Ventilgehäuse 4 heraus. Die Reglerdüse 10 ist im Bereich ihrer äußeren Stirnseite 20 am Außenumfang dicht und fest mit dem Ventilgehäuse 4 verbunden. Diese Verbindung zwischen der Reglerdüse 10 und dem Ventilgehäuse 4 kann beispielsweise durch eine Bördelung erfolgen.

Im Gehäuseunterteil 4a gibt es eine weitere Gehäuseaussparung 4f, in die der zweite Fluidanschluß 12 umfangsmäßig fest und dicht angebördelt ist.

Über eine Bördelverbindung 4g ist das Gehäuseunterteil 4a mit dem Gehäuseoberteil 4b fest und dicht verbunden. Die Bördelverbindung 4g ist so gestaltet, daß in der Bördelverbindung 4g auch die Membran 6 an ihrem Außenumfang gehalten wird.

Das Gehäuseunterteil 4a ist in axialer Richtung so dimensioniert, daß zwischen dem zweiten Fluidanschluß 12 und der Bördelverbindung 4g ausreichend Platz für das Werkzeug zum Bearbeiten der Bördelverbindung 4g bleibt. Weil wegen dem erforderlichen Platz zwischen der Bördelverbindung 4g und dem Fluidanschluß 12 das Gehäuseunterteil 4a ausreichend lang dimensioniert sein muß, kann die Reglerdüse 10 ohne zusätzlichen Platzbedarf im wesentlichen vollständig in das Ventilgehäuse 4 integriert sein.

In der Reglerdüse 10 ist eine Stecköffnung 30 vorgesehen. Die Stecköffnung 30 verläuft in Fortsetzung zur Anschlußöffnung 22. In die Stecköffnung 30 ist ein als Stecker ausgebildetes Kupplungsteil 33 eingesteckt. Zu der Anschlußverbindung 3 gehören im wesentlichen die am' Ventilgehäuse 4 vorgesehene Stecköffnung 30 und das an der Fluidleitung 24 vorgesehene Kupplungsteil 33. Das Kupplungsteil 33 hat eine die Anschlußöffnung 22 mit der Fluidleitung 24 verbindende, gestrichelt dargestellte Durchgangsbohrung 33d.

Zum Halten des Kupplungsteils 33 am Ventilgehäuse 4 des Druckregelventils 2 ist eine Schnappverbindung 40 vorgesehen. Die Schnappverbindung 40 besteht im wesentlichen aus einem zum Ventilgehäuse 4 gehörenden Gehäuseanschlag 40g und aus einem zum Kupplungsteil 33 gehörenden Steckeranschlag 40s. Beim dargestellten Ausführungsbeispiel gehören zu der Schnappverbindung 40 auch eine Montageschräge 40m (Fig. 3) und ein federnder Ring 40r mit einem Schlitz 40u (Fig. 2). Ein Dichtring 42 dient zum Abdichten zwischen dem Außenumfang des Kupplungsteils 33 und der Stecköffnung 30 der Reglerdüse 10.

Zwecks besserer Übersichtlichkeit sind die Reglerdüse 10 und ein Teil des Kupplungsteils 33 in weiteren Figuren mit geändertem Maßstab als Einzelteil nochmals wiedergegeben.

Die **Figur 2** zeigt im wesentlichen die Reglerdüse 10.

In allen Figuren sind gleiche oder gleichwirkende Teile mit denselben Bezugszeichen versehen. Sofern nichts Gegenteiliges erwähnt bzw. in der Zeichnung dargestellt ist, gilt das anhand eines der Figuren Erwähnte und Dargestellte auch bei den anderen Ausführungsbeispielen. Sofern sich aus den Erläuterungen nichts anderes ergibt, sind die Einzelheiten der verschiedenen Ausführungsbeispiele miteinander kombinierbar.

Die Stecköffnung 30 zum Aufnehmen des Kupplungsteils 33 hat eine zylindrische, abgestuft ausgeführte Innenfläche mit einem kleineren Durchmesser 30a, einem größeren Durchmesser 30b und eine Einführschräge 30e (Fig. 2).

Im Bereich des größeren Durchmessers 30b der Stecköffnung 30 ist ein Einstich 30f vorgesehen. Im Einstich 30f befindet sich der federnde Ring 40r. Der federnde Ring 40r ist so dimensioniert, daß er in dem Einstich 30f gehalten wird. Der federnde Ring 40r ist umlaufend, jedoch an einer Stelle durch den Schlitz 40u unterbrochen. Der federnde Ring 40r hat eine der äußeren Stirnseite 20 abgewandte Querseite. An dieser Querseite befindet sich der Gehäuseanschlag 40g.

Die **Figur 3** zeigt einen Abschnitt des Kupplungsteils 33.

Das Kupplungsteil 33 hat eine zylindrische, abgestuft ausgeführte Außenfläche mit einem kleineren Durchmesser 33a, einem größeren Durchmesser 33b und einer Einführschräge 33e. Am Übergang zwischen dem kleineren Durchmesser 33a und dem größeren Durchmesser 33b gibt es eine Montageschräge 40m. Die Montageschräge 40m ist etwa um 45 Grad gegenüber der Längsachse des Kupplungsteils 33 geneigt. Auf der dem kleineren Durchmesser 33a abgewandten Seite des größeren Durchmessers 33b gibt es einen weiteren kleineren Durchmesser 33c. Der Durchmesser 33c ist beispielsweise maßlich gleich wie der Durchmesser 33a. Am Übergang vom größeren Durchmesser 33b zum kleineren Durchmesser 33c befindet sich am Kupplungsteil 33 der Steckeranschlag 40s. Der Steckeranschlag 40s verläuft rechtwinklig zur Längsrichtung des Kupplungsteils 33.

Der Dichtring 42 wird im Bereich des kleineren Durchmessers 33a auf dem Kupplungsteil 33 gehalten. Zum Halten des aus Elastomerwerkstoff bestehenden Dichtrings 42 ist am Außenumfang des Kupplungsteils 33 im Bereich des kleineren Durchmessers 33a ein Dichtringeinstich 42a vorgesehen.

Beim Einführen des Kupplungsteils 33 in die in der Reglerdüse 10 vorgesehene Stecköffnung 30 wird, sobald die Montageschräge 40m auf den federnden Ring 40r trifft, der federnde Ring 40r radial ausgeweitet, bis der größere Durchmesser 33b des Kupplungsteils 33 durch den federnden Ring 40r hindurchgeschoben ist. Die federnde radiale Bewegung des federnden Rings 40r wird ermöglicht durch den Schlitz 40u und dadurch daß der Durchmesser des den federnden Ring 40r haltenden Einstichs 30f größer ist als der Außendurchmesser des federnden Rings 40r.

Das Kupplungsteil 33 wird in der Stecköffnung 30 dadurch gehalten, daß der am Kupplungsteil 33 vorgesehene Steckeranschlag 40s vom am federnden Ring 40r vorgesehenen Gehäuseanschlag 40g gehalten wird. Der federnde Ring 40r wiederum wird durch den Einstich 30f gegenüber dem Ventilgehäuse 4 gehalten.

Anstatt in dem Einstich 30f kann der federnde Ring 40r alternativ genausogut in einem am Außenumfang des Kupplungsteils 33 vorgesehenen Einstich angeordnet sein.

Der Dichtringeinstich 42a zum Halten des Dichtrings 42 kann alternativ auch in der Reglerdüse 10 als Unterbrechung des kleineren Durchmessers 30a der Stecköffnung 30 vorgesehen sein.

Bei dem in der Figur 1 dargestellten Ausführungsbeispiel ist die Schnappverbindung 40 so ausgebildet, daß ein leichtes Verbinden des Kupplungsteils 33 mit dem Ventilgehäuse 4 möglich ist und daß das Kupplungsteil 33 sicher mit dem Ventilgehäuse 4 gekuppelt ist. Ein einfaches Demontieren des Kupplungsteils 33 vom Ventilgehäuse 4 ist bei der Ausführung nach Figur 1 nicht vorgesehen.

Die Figur 4 zeigt ein weiteres, besonders ausgewähltes, vorteilhaftes Ausführungsbeispiel.

Am Kupplungsteils 33 gibt es einen Sicherungsbund 44, einen Absatz 46 und einen Vorsprung 48. Zwischen dem Sicherungsbund 44 und dem Absatz 46 ist ein umlaufendes Halteelement 50 eingebaut. Zusätzlich ist eine Demontagehilfe 52 vorgesehen. An dem Ventilgehäuse 4 bzw. an der Reglerdüse 10 im Bereich der äußeren Stirnseite 20 ist ein umlaufender radial nach innen ragender Vorsprung 4v vorgesehen.

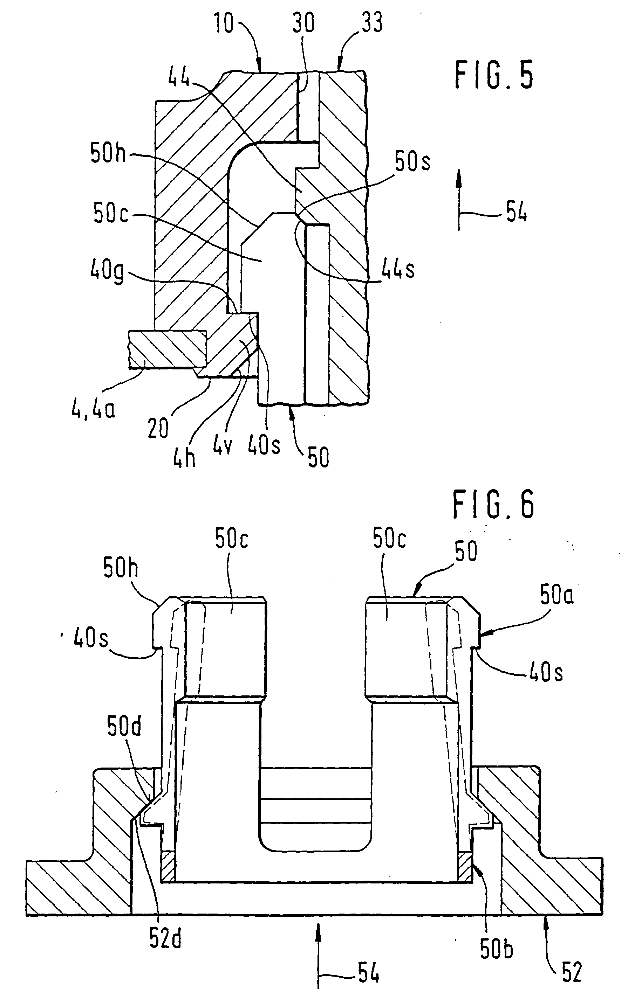

Bei diesem in der **Figur 4** gezeigten Ausführungsbeispiel gehören die Stecköffnung 30, der Vorsprung 4v, der Gehäuseanschlag 40g (Fig. 5), das Kupplungsteil 33, das Halteelement 50, der Steckeranschlag 40s (Fig. 5), und die Demontagehilfe 52 zu der Anschlußverbindung 3.

Die **Figur 5** zeigt einen Ausschnitt aus der Figur 4. Der Bereich um den Sicherungsbund 44, den Vorsprung 4v und um den Bereich des Halteelements 50, der mit dem Vorsprung 4v in Eingriff steht, ist zwecks besserer Übersichtlichkeit in der Figur 5 mit geändertem Maßstab nochmals wiedergegeben. Der in der Figur 5 wiedergegebene Bereich ist in der Figur 4 durch einen mit V bezeichneten Kreis angedeutet.

Die **Figur 6** zeigt nochmals das Halteelement 50 und die Demontagehilfe 52 mit geändertem Maßstab, wobei der besseren Übersichtlichkeit wegen in der Figur 6 die übrigen Bauteile nicht dargestellt sind.

Zwecks besserem Verständnis der nachfolgenden Beschreibung ist in den Figuren 4 bis 6 ein in allen Figuren in gleiche Richtung weisender Pfeil 54 eingezeichnet.

Das Halteelement 50 hat einen vorderen Bereich 50a und einen hinteren Bereich 50b (Fig. 6). Der vordere Bereich 50a ist in Längsrichtung geschlitzt, so daß sich am Halteelement 50 mehrere, beispielsweise vier Haltekrallen 50c ergeben. Im hinteren Bereich 50b sind die Haltekrallen 50c umfangsmäßig miteinander verbunden. Im vorderen Bereich 50a gibt es an den Haltekrallen 50c jeweils radial nach außen weisende Vorsprünge, an denen sich der Steckeranschlag 40s befindet. Zwischen dem vorderen Bereich 50a und dem hinteren Bereich 50b, näher zum hinteren Bereich 50b hin, gibt es an den Haltekrallen 50c eine mit Unterbrechungen umlaufende, schräg radial nach außen vorspringende Schräge 50d (Fig. 6).

An der Demontagehilfe 52 gibt es eine schräg radial nach innen verlaufende Schräge 52d (Fig. 6). Die Schrägen 50d und 52d sind so aufeinander abgestimmt, daß bei einer Bewegung der Demontagehilfe 52 relativ zum Halteelement 50, entgegen Pfeil 54, der vordere Bereich 50a, wo sich die Haltekrallen 50c mit dem Steckeranschlag 40s befinden, elastisch radial nach innen gedrückt wird. Die Figur 6 zeigt die Haltekrallen 50c in der nach innen gedrückten Position mit gestrichelten Linien. Sind die Haltekrallen 50c, wie in der Figur 6 gestrichelt dargestellt, nach innen gedrückt, dann ist der Steckeranschlag 40s des Halteelements 50 außer Eingriff gegenüber dem Gehäuseanschlag 40g des Ventilgehäuses 4 (Fig. 5). In dieser gedrückten Stellung kann das Kupplungsteil 33 zusammen mit dem Halteelement 50 problemlos entgegen Pfeil 54 aus der Stecköffnung 30 (Fig. 4) herausgenommen werden. Zur Erleichterung der Demontage ist an dem Kupplungsteil 33 der Vorsprung 48 vorgesehen. Mit Hilfe des Vorsprungs 48 können durch einfaches axiales Gegeneinanderdrücken der Demontagehilfe 52 und des Vorsprungs 48 die Haltekrallen 50c radial nach innen gedrückt werden. Beim axialen Drücken der Demontagehilfe 52 gegen den Vorsprung 48 stützt sich der hintere Bereich 50b des Halteelements 50 stirnseitig am Absatz 46 ab, was die Kraftübertragung zwischen den beiden Schrägen 50d und 52d (Fig. 6) ermöglicht.

Der Sicherungsbund 44 ist als zusätzliche Maßnahme vorgesehen, damit das Kupplungsteil 33 im montierten Zustand nicht unbeabsichtigt aus der Stecköffnung 30 herausrutschen kann.

Am Sicherungsbund 44 gibt es einen Sicherungsanschlag 44s, und am vorderen Bereich 50a des Halteelements 50 ist ein mit Unterbrechungen umlaufender Sicherungsanschlag 50s (Fig. 5) vorgesehen. Die Sicherungsanschläge 44s, 50s sind etwa um 45° gegenüber Achsrichtung geneigt. Wenn das Kupplungsteil 33 entgegen Pfeil 54 gedrückt bzw. gezogen wird, dann drückt der Sicherungsanschlag 44s am Kupplungsteil 33 auf den Sicherungsanschlag 50s des Halteelements 50 und sorgt für eine auf die Haltekrallen 50c radial nach außen wirkende Kraft. Dabei werden die Haltekrallen 50c gegen den gehäuseseitigen Vorsprung 4v gedrückt, und es ist sichergestellt, daß der Steckeranschlag 40s in Eingriff bleibt mit dem Gehäuseanschlag 40g. Steigt die Kraft auf das Kupplungsteil 33, entgegen Pfeilrichtung 54, dann steigt auch die Kraft, die als Eingriffssicherung für den Steckeranschlag 40s gegenüber dem Gehäuseanschlag 40g dient.

Am Halteelement 50 gibt es eine Einführschräge 50h und an der mit dem Ventilgehäuse 4 fest verbundenen Reglerdüse 10 ist eine Einfuhrschräge 4h vorgesehen (Fig. 5). Die Einführschrägen 4h und 50h sind so aufeinander abgestimmt, daß beim Einführen des Kupplungsteils 33 in Pfeilrichtung 54 in die Stecköffnung 30 die Haltekrallen 50c des Halteelements 50 elastisch radial nach innen gedrückt werden, bis der an den Haltekrallen 50c vorgesehene Steckeranschlag 40s über den Vorsprung 4v geschnappt ist und die Haltekrallen 50c wegen der elastisch radial nach außen gerichteten Vorspannung in Wirkeingriff mit dem Gehäuseanschlag 40g gelangt sind.

Die axiale Länge des Halteelements 50, das zwischen dem Sicherungsbund 44 und dem Absatz 46 gehalten wird, ist so dimensioniert, daß das Halteelement 50 zwischen dem Sicherungsbund 44 und dem Absatz 46 axiales Spiel hat. Wegen diesem axialen Spiel hebt beim Einführen des Kupplungsteils 33 in die Stecköffnung 30 der Sicherungsanschlag 44s (Fig. 5) vom Sicherungsanschlag 50s ab, so daß die Bewegung radial nach innen der in radialer Richtung elastischen Haltekrallen 50c während der Montage nicht behindert wird.

Im montierten Zustand, wenn, beispielsweise vom hydraulischen Druck in der Anschlußöffnung 22 oder durch eine mechanische Kraft, das Kupplungsteil 33 entgegen Pfeil 54 belastet wird, dann stützen sich die Haltekrallen 50c einerseits am Gehäuseanschlag 40g des Ventilgehäuses 4 und andererseits an dem am Kupplungsteil 33 vorgesehenen Sicherungsanschlag 44s ab. Je größer die Kraft wird,die das Kupplungsteil 33 und das Ventilgehäuse 4 auseinander bringen will, desto größer wird die beabsichtigte Verspannung zwischen dem Gehäuseanschlag 40g, den Haltekrallen 50c und dem Sicherungsanschlag 44s. Soll aber das Kupplungsteil 33 gewollt vom Ventilgehäuse 4 abgemacht werden, dann kann durch leichtes Bewegen des Kupplungsteils 33 in Richtung des Pfeils 54 die Verspannung zwischen dem Gehäuseanschlag 40g, den Haltekrallen 50c und dem Sicherungsanschlag 44s aufgehoben werden und durch gleichzeitiges leichtes Verbiegen der Haltekrallen 50c radial nach innen kann das Kupplungsteil 33 ohne großen Kraftaufwand vom Ventilgehäuse 4 abgenommen werden. Die vorgeschlagene Demontagehilfe 52 erleichtert das radiale Verbiegen der Haltekrallen 50c bei der Demontage.

Bei dem in der Figur 4 dargestellten Ausführungsbeispiel umfaßt die Schnappverbindung 40 im wesentlichen den dem Ventilgehäuse 4 zugeordneten Gehäuseanschlag 40g (Fig. 5) und das am Sicherungsbund 44 sich abstützende Halteelement 50 mit dem dem Kupplungsteil 33 zugeordneten Steckeranschlag 40s (Fig. 5). Die Schnappverbindung 40 ist so ausgebildet, daß ein leichtes Verbinden des Kupplungsteils 33 mit dem Ventilgehäuse 4 möglich ist, das Kupplungsteil 33 sicher mit dem Ventilgehäuse 4 gekuppelt ist und zusätzlich trotzdem ein einfaches Demontieren des Kupplungsteils 33 vom Ventilgehäuse 4 möglich ist.

## Patentansprüche

1. Druckregelventil mit Anschlußverbindung, insbesondere für Kraftstoffversorgungsanlagen von Brennkraftmaschinen, mit einem Ventilgehäuse (4), und mit einer in dem Ventilgehäuse (4) eingespannten Membran, die in dem Ventilgehäuse (4) einen Fluidraum von einer Ventilkammer trennt, sowie mit einem mit der Membran verbundenen Schließkörper (8), ferner mit einer Reglerdüse (10), wobei die Reglerdüse (10) ein dem Schließkörper (8) zugewandtes inneres Ende, ein aus dem Ventilgehäuse führendes äußeres Ende, sowie einen die beiden Enden verbindenden Durchlaß hat und an dem inneren Ende ein Ventilsitz vorgesehenen ist, wobei im Bereich des äußeren Endes der Reglerdüse (10) eine Stecköffnung (30) vorgesehen ist, wobei mit einem Gehäuseanschlag (40g) in der Stecköffnung (30) und **dadurch gekennzeichnet, daß** in die Stecköffnung (30) ein als Stecker ausgebildetes Kupplungsteil (33) dichtend eingesteckt ist und in den Gehäuseanschlag (40g) eingreift.

2. Druckregelventil nach Anspruch 1, **dadurch gekennzeichnet, daß** eine das Kupplungsteil (33) gegen das Druckregelventil (2) haltende Schnappverbindung (40) vorgesehen ist.

3. Druckregelventil nach Anspruch 2, **dadurch gekennzeichnet, daß** die Schnappverbindung (40) lösbar ist.

4. Druckregelventil nach einem der Ansprüche 1 bis 3, **dadurch gekennzeichnet, daß** das Kupplungsteil (33) eine zylindrische Außenfläche (33a) und die Stecköffnung (30) zum Aufnehmen der zylindrischen Außenfläche (33a) eine zylindrische Innenfläche (30a) haben und an der zylindrischen Außenfläche (33a) ein Einstich (42a) zum Halten eines Dichtringes (42) vorgesehen ist, der bei in die Stecköffnung (30) eingestecktem Kupplungsteil (33) gegen die Innenfläche (30a) preßt.

## Claims

1. A pressure control valve with union connection, especially for fuel feed systems of internal combustion engines, with a valve housing (4) and with a diaphragm, which is clamped in the valve housing (4) and in the valve housing (4) divides a fluid chamber from a valve chamber, together with a closing body (8) connected to the diaphragm, and with a regulating nozzle (10), the regulating nozzle (10) having an inner end facing the closing body (8), an outer end leading out of the valve housing, and a passage connecting the two ends, and a valve seat being provided at the inner end, an insertion opening (30) being provided in the area of the outer end of the regulating nozzle (10), with a housing stop (40g) in the insertion opening (30) and **characterized in that** a coupling part (33) designed as a plug is tightly inserted into the insertion opening (30) and engages in the housing stop (40g).

2. The pressure control valve according to Claim 1, **characterized in that** a snap connection (40) holding the coupling part (33) against the pressure control valve (2) is provided.

3. The pressure control valve according to Claim 2, **characterized in that** the snap connection (40) is releasable.

4. The pressure control valve according to one of Claims 1 to 3, **characterized in that** the coupling part (33) has a cylindrical outer surface (33a) and the insertion opening (30) has a cylindrical inner surface (30a) to accommodate the cylindrical outer surface (33a), and a recess (42a) is provided on the cylindrical outer surface (33a) for holding a sealing ring (42), which presses against the inner surface (30a) when the coupling part (33) is inserted into the insertion opening (30).

## Revendications

1. Soupape de régulation de pression comportant un raccordement notamment pour une installation d'alimentation en carburant de moteurs à combustion interne comprenant :
un boîtier de soupape (4) et une membrane tendue dans le boîtier (4), cette membrane divisant le boîtier (4) en une chambre à fluide et une chambre à soupape, ainsi qu'un organe d'obturation (8) relié à la membrane et en outre
une buse de régulation (10) ayant une extrémité intérieure tournée vers l'organe d'obturation (8), une extrémité extérieure sortant du boîtier de soupape ainsi qu'un passage reliant les deux extrémités, avec un siège de soupape à son extrémité intérieure,
et avec au niveau de l'extrémité extérieure de la buse de régulation (10), un orifice d'emmanchement (30) comportant une butée de boîtier (40g) dans cet orifice d'emmanchement (30),
**caractérisée en ce que**
l'orifice d'emmanchement (30) reçoit une pièce d'accouplement (33) en forme de connecteur, engagée de manière étanche, et venant prendre contre la butée de boîtier (40g).

2. Soupape de régulation de pression selon la revendication 1,
**caractérisée**
**par** une liaison par encliquetage (40) qui retient la pièce d'accouplement (33) contre la soupape de régulation de pression (2).

3. Soupape de régulation de pression selon la revendication 2,
**caractérisée en ce que**
la liaison par encliquetage (40) est amovible.

4. Soupape de régulation de pression selon l'une quelconque des revendications 1 à 3,
**caractérisée en ce que**
la pièce d'accouplement (33) présente une surface extérieure cylindrique (33a) et l'orifice d'emmanchement (30), présente, pour recevoir la surface extérieure cylindrique (33a), une surface intérieure cylindrique (30a), et
la surface extérieure cylindrique (33a) comporte une gorge (42a) pour retenir un joint d'étanchéité (42) qui lorsque la pièce d'accouplement (33) est engagée dans l'orifice d'emmanchement (30) presse contre la surface intérieure (30a).
